# EUROPÄISCHE PATENTSCHRIFT

(11) **EP 0 411 355 B1**
(45) Veröffentlichungstag und Bekanntmachung des Hinweises auf die Patenterteilung: **20.10.1993**
(21) Anmeldenummer: 90113239.9
(22) Anmeldetag: 11.07.1990
(51) Int. Cl.: B60T 15/24

(54) **Über zwei Kreise ansteuerbares Relaisventil, insbesondere Anhängersteuer- oder Anhängerbremsventil, für Druckluftbremsanlagen an Kraftfahrzeugen**
Double circuit controlled relay valve, especially trailer brake or trailer control valve, for pneumatic vehicle brake systems
Valve relais, commandeé par deux circuits, en particulier valve de contrôle ou commande pour remorques, pour systèmes pneumatiques de freinage de véhicules

(30) Priorität: 31.07.1989 DE 3925292
(43) Veröffentlichungstag der Anmeldung: 06.02.1991
(73) Patentinhaber: GRAU GMBH, D-69123 Heidelberg (DE)
(72) Erfinder: Grüner, Hans, D-6803 Edingen-Neckarhausen (DE)
(74) Vertreter: Rehberg, Elmar, Dipl.-Ing.

(56) Entgegenhaltungen:
- DE-A- 2 431 259
- DE-A- 2 612 680

## Beschreibung

Die Erfindung geht aus von einem über zwei Kreise ansteuerbaren Relaisventil mit den im Oberbegriff des Anspruchs 1 genannten Merkmalen. Solche Relaisventile dienen zur Steuerung des Drucks einer Anhängerbremsanlage in Abhängigkeit von dem Druck in der Bremsanlage des Motorfahrzeugs.

Die DE-A 24 31 259 zeigt ein über zwei Kreise ansteuerbares Relaisventil mit den im Oberbegriff des Anspruchs 1 angegebenen Merkmalen. Zwischen den beiden gleichsinnig betätigbaren Steuerkolben ist bereits ein Trennkolben angeordnet, der als separater Kolben vorgesehen ist und somit weder einen Bestandteil des ersten noch des zweiten Steuerkolbens bildet. In zwei Zylindern mit übereinstimmenden Durchmessern, von denen der eine durch eine Bohrung im Gehäuse und der andere durch eine Bohrung in einem Gehäusedeckel gebildet wird, sind in einen Zylinder der erste Steuerkolben und im anderen Zylinder der zweite Steuerkolben und der Trennkolben mit übereinstimmenden Durchmessern und entsprechenden Dichtungen verschiebbar geführt. Zwischen dem ersten Steuerkolben und dem Trennkolben wird ein Raum eingeschlossen, der über eine gesonderte, zusätzlich zur normalen Entlüftungsöffnung des Auslaßventils vorgesehene Entlüftungsöffnung am Ventilgehäuse dauernd an die Atmosphäre angeschlossen ist. Der Trennkolben ist im anderen Zylinder nicht freifliegend angeordnet, sondern ihm ist ein Anschlag zugeordnet, der seine freie Verschiebbarkeit im Zylinder in der einen Richtung begrenzt. Das Problem der Vermischung von Steuerluft der beiden Steuerkreise bei einem Defekt der Dichtung des ersten Steuerkolbens oder der Dichtung des Trennkolbens ist hier bereits durch eine Abströmmöglichkeit von Steuerluft in den zwischen dem ersten Steuerkolben und dem Trennkolben gebildeten und an die Atmosphäre angeschlossenen Raum ermöglicht, so daß diesbezüglich keine Vermischung von Steuerluft eintritt und andererseits an dem dabei auftretenden Geräusch eine Erkennungsmöglichkeit für die Eintreten des Defektfalls gegeben ist. Die drei Kolben sowie die zwei Zylinder, in denen sie geführt sind, weisen jeweils eine relativ große axiale Erstreckung auf, wobei sich vorteilhaft damit die Möglichkeit eröffnet, die Anschlüsse für die Steuerdrücke der beiden Kreise seitlich neben diesen zwei Zylindern anzuordnen und auch die radialen Bohrungen, die in den Zylindern enden, so zu plazieren, daß bei der Bewegung der drei Kolben die Dichtungen keine der drei radialen Bohrungen überfahren. Nachteilig hieran ist, daß diese Baugruppe aus den drei Kolben und den Zylindern eine relativ große axiale Bauhöhe aufweist.

Weiterhin ist es nachteilig, daß der zwischen dem ersten Steuerkolben und dem Trennkolben gebildete Raum durch eine zweite Entlüftungsöffnung an die Atmosphäre angeschlossen ist, so daß das Ventil zwei Öffnungen aufweist, durch die Schmutz und Feuchtigkeit in das Ventil eindringen und seine Funktion beeinträchtigen können.

Auch die DE-OS 22 46 242 und die DE-C-22 51 479 zeigen zweikreisig ansteuerbare Relaisventile, bei denen das Problem der Vermischung von Steuerluft der beiden Kreise gelöst ist. Hierzu bedarf es jedoch einer komplizierten Herstellung des ersten Steuerkolbens, der mit zwei Dichtungen ausgestattet ist, zwischen denen eine umlaufende Nut angeordnet ist, die über eine kompliziert anzubringende radiale Bohrung und einen hohl gestalteten Fortsatz dauernd an die Atmosphäre angeschlossen ist. Es ist also auch hier bereits ein Raum zwischen den beiden Steuerkammern gebildet, der dauernd an die Atmosphäre angeschlossen ist. Bei Ausfall eines Steuerkreises bleibt trotzdem die Voreilung vorteilhaft erhalten. Dies gilt auch für den Fall, daß eine der beiden Dichtungen des einen Steuerkolbens undicht werden sollte. Infolge der komplizierten Herstellung und der Anordnung der beiden Dichtungen auf dem einen Steuerkolben wird jedoch eine relativ große Baulänge benötigt.

Aus der DE-A-33 08 082 ist ein weiteres, über zwei Kreise ansteuerbares Relaisventil bekanntgeworden, bei dem, ähnlich wie bei den Gegenständen der DE-C-22 46 242 und 22 51 479, der Steuerkolben des ersten Kreises vergleichsweise kompliziert ausgebildet und mit zwei Dichtungen ausgestattet ist, wobei der Raum zwischen den beiden Dichtungen an die Atmosphäre angeschlossen ist. Dieses bekannte Relaisventil weist zwar auch einen gehäusefesten Einsatzkörper auf, der jedoch weder der Zufuhr des Steuerdrucks für den zweiten Steuerkreis noch der Begrenzung einer zweiten Wiegekammer dient. Dieser Einsatzkörper gehört funktionsmäßig zu einer Voreileinrichtung und stellt sicher, daß die Rückseite eines Rückwirkkolbens über einen Druckabschneider von einem Teildruck des ausgesteuerten Bremsdrucks beaufschlagt werden kann.

Der Erfindung liegt die Aufgabe zugrunde, ein über zwei Kreise ansteuerbares Relaisventil der eingangs beschriebenen Art bereitzustellen, bei dem die aus den beiden Steuerkolben und dem Trennkolben sowie dem gemeinsamen Zylinder gebildete Baugruppe in axialer Richtung kurz und gedrängt baut und trotzdem die Steuerdrücke der beiden Ansteuerkreise so herangeführt sind, daß bei der Bewegung der drei Kolben keine radialen Bohrungen mit den Dichtungen der drei Kolben überfahren werden.

Erfindungsgemäß wird dies in Verbindung mit den im kennzeichnenden Teil des Anspruchs 1 angegebenen Merkmalen erreicht.

Durch die freifliegende Anordnung des Trennkolbens in dem gemeinsamen Zylinder wird eine gemeinsam nutzbare Lauffläche für die Kolben geschaffen, so daß die Anordnung kürzer baut als bei der Anordnung zusätzlicher Anschläge und Aufteilung der Lauffläche des Zylinders in jeweils den einzelnen Kolben zugeordnete Bereiche. Diese Möglichkeit setzt natürlich voraus, daß im Bereich des Zylinders die Zylinderwandung von radialen Bohrunge nicht durchsetzt wird, so daß die Lauffläche voll nutzbar ist. Der Trennkolben wird mit einem hohlen Fortsatz ausgestattet, der sich in einem hohlen, den Sitz für das Auslaßventil tragenden Fortsatz des zweiten Steuerkolbens dichtend führt. Mit dieser Ausbildung wird nicht nur die Möglichkeit geschaffen, den zwischen dem ersten Steuerkolben und dem Trennkolben gebildeten Raum nach unten an die Atmosphäre anzuschließen, sondern es wird gleichzeitig auch die Steuerkammer für den zweiten Kreis abgedichtet. Dieser Anordnung aus drei Kolben mit zwei hohlen Fortsätzen wird ein Einsatz zugeordnet, der ortsfest im Gehäuse angeordnet und dichtend gelagert ist. Dieser Einsatz hat mehrere Funktionen. Zum einen dient er in geschickter Weise in Verbindung mit den beiden hohlen Fortsätzen der Heranführung der Steuerleitung des zweiten Kreises, ohne die Lauffläche des Zylinders zu beeinträchtigen. Weiterhin dient er der Montagemöglichkeit der verschiedenen Teile. Auch erbringt der Einsatz den weiteren Vorteil, daß die Wirkfläche der Wiegekammer unter dem zweiten Steuerkolben durch entsprechenden Austausch des Einsatzes und des zweiten Steuerkolbens leicht variiert und damit angepaßt werden kann. Der Einsatz wird insoweit nicht in Verbindung mit einer Voreileinrichtung benutzt, wie es im Stand der Technik bekannt ist.

Die Anordnung eines gesonderten freifliegenden Trennkolbens zwischen den beiden Steuerkolben und die Unterbringung der drei Kolben in einem gemeinsamen Zylinder ist weniger aufwendig als die Ausstattung des ersten Steuerkolbens mit zwei Dichtungen und einer kompliziert anzubringenden Entlüftungsleitung. Die Bauhöhe bzw. Dicke der verschiedenen Kolben kann jeweils auf eine Scheibe begrenzt werden, die zudem noch in ihrer hutartigen Gestaltung frei wählbar ist, so daß diesbezüglich die beiden Steuerkolben und der Trennkolben jeweils eine aneinander angepaßte, ineinandergreifende Form aufweisen können, wodurch die notwendige Bauhöhe reduziert wird. Durch die besondere Ausbildung des Trennkolbens und der beiden Steuerkolben wird zwischen dem ersten Steuerkolben und dem Trennkolben ein Raum geschaffen, der dauernd an die Atmosphäre angeschlossen ist und trotzdem keine zweite Entlüftungsöffnung erfordert. Wird eine der beiden Dichtungen, also die Dichtung auf dem ersten Steuerkolben oder die Dichtung auf dem Trennkolben, defekt, dann wird das Vermischen der beiden Steuerkreise vermieden und Steuerluft strömt im Betätigungsfall über die einzige Entlüftungsöffnung am Relaisventil in die Atmosphäre ab, so daß das dabei entstehende Geräusch eine erste Warnungsmöglichkeit bietet. Außerdem findet eine Druckabsenkung statt, wodurch eine zweite Möglichkeit geschaffen ist, den Defekt wahrzunehmen. Sofern das Relaisventil mit einer Voreilung ausgestattet ist, erbringt die Lösung des Problems der Vermischung der beiden Steuerkreise keine nachteiligen Folgen für die Voreilung. Die beiden Steuerkolben und/oder der Trennkolben können vorteilhaft aus Metall, Kunststoff o. dgl. hergestellt werden, wobei durch die hutartig ineinandergreifende Gestaltung auch eine gewisse Abstützung aneinander erfolgt.

Es können entweder an dem ersten Steuerkolben oder an dem Trennkolben, dem entlüfteten Raum zugekehrt, Noppen, Rippen o. dgl. vorgesehen sein. Damit wird eine gut durchströmbare Verbindung geschaffen, falls die Dichtung auf dem ersten Steuerkolben oder auf dem Trennkolben undicht werden sollte.

Die Noppen, Rippen o. dgl. können mit Zentrierflächen ausgestattet sein, die bei der Bewegung der Kolben mit- oder gegeneinander einem Verkanten der Kolben entgegenwirken.

Der hohle Fortsatz des zweiten Steuerkolbens ist in dem Einsatz mit zwei Dichtungen geführt, zwischen denen eine radiale Durchbrechung angeordnet ist, die einen Teil der Steuerleitung bildet.

Der Einsatz und der zweite Steuerkolben können zur Variation der Wiegefläche austauschbar sein. Mit der Variation der Wiegefläche unter dem zweiten Steuerkolben wird dabei aber auch gleichzeitig die Wirkfläche des zweiten Steuerkolbens in der Bremskammer variiert.

Der Einsatz kann eine radiale Bohrung, die einen Teil der Steuerleitung des zweiten Steuerkolbens bildet, und eine axiale Bohrung, die die Bremskammer mit der Wiegekammer unter dem zweiten Steuerkolben verbindet, aufweisen. Es versteht sich, daß die axiale Bohrung im Fall der Anordnung eines Voreilventils entweder in Fortfall kommt oder das Voreilventil genau in dieser axialen Bohrung angeordnet wird.

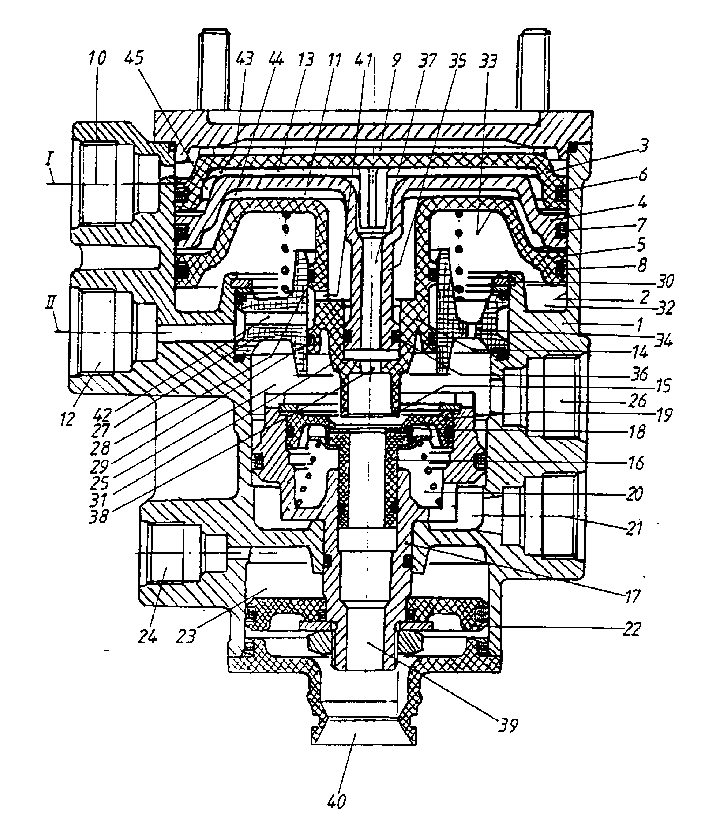

Die Erfindung wird anhand eines bevorzugten Ausführungsbeispiels weiter erläutert und beschrieben. In der Zeichnung ist ein Vertikalschnitt durch ein Anhängersteuerventil dargestellt.

Das als Relaisventil ausgebildete Anhängersteuerventil weist ein Gehäuse 1 auf, welches zweckmäßig auch mehrteilig gestaltet sein kann. In einem gemeinsamen, im Gehäuse 1 gebildeten Zylinder 2 sind gleichsinnig hintereinander ein erster Steuerkolben 3, ein Trennkolben 4 und ein zweiter Steuerkolben 5 angeordnet, wobei diese Kolben die Dichtungen 6, 7 und 8 tragen. Oberhalb des ersten Steuerkolbens 3, der einen geschlossenen Kolbenboden aufweist, ist eine Steuerkammer 9 vorgesehen, die in dauernder Verbindung mit einem Anschluß 10 am Gehäuse 1 steht, wobei über diesen Anschluß 10 der erste Steuerkreis I an das Relaisventil herangeführt ist. Oberhalb des zweiten Steuerkolbens 5 ist die zugehörige Steuerkammer 11 gebildet, die in dauernder Verbindung zu einem Anschluß 12 steht, über den der zweite Steuerkreis II an das Gehäuse 1 herangeführt ist. Der Trennkolben 4 begrenzt nicht nur die zweite Steuerkammer 11, sondern teilt mit dem ersten Steuerkolben 3 einen Raum 13 ab, der unabhängig von jeglicher Betätigung, also dauernd, an die Atmosphäre angeschlossen ist.

Der zweite Steuerkolben 5 besitzt einen hohlen Fortsatz 14, der in einem Sitz 15 endet, der zusammen mit einem federnd aufgehängten Doppelventilkörper 16 das Auslaßventil 15, 16 bildet. Der Doppelventilkörper 16 ist in einem Bremskolben 17 federnd aufgehängt und dichtend geführt, der bei Ausbildung als Anhängersteuerventil zur Steuerung der Feststellbremse dient, bei Ausbildung als Anhängerbremsventil einen Notbremskolben darstellt. In dem Bremskolben ist ein Einlaßsitz 18 vorgesehen, der mit dem Doppelventilkörper 16 das Einlaßventil 16, 18 bildet. Der Einlaßsitz 18 ist Bestandteil eines gesonderten Formteils 19, durch welches sowie durch den Doppelventilkörper 16 eine Vorratskammer 20 im Bremskolben 17 begrenzt wird, die in dauernder Verbindung zu einem Anschluß 21 steht, über den das Relaisventil mit Druckluft versorgt wird.

Mit dem Bremskolben 17 ist ein Feststellkolben 22 verbunden, der eine Feststellkammer 23 im Gehäuse 1 abteilt, die in dauernder Verbindung zu einem Anschluß 24 steht, an den üblicherweise das Handbremsventil der Feststellbremse angeschlossen ist.

Auf der anderen Seite des Bremskolbens 17 ist die Bremskammer 25 angeordnet, die in dauernder Verbindung zu einem Anschluß 26 am Gehäuse 1 steht, an den die zum Kupplungskopf führende Bremsleitung bei Ausbildung als Anhängersteuerventil angeschlossen ist.

Im Gehäuse 1 ist ein Einsatz 27 dichtend und ortsfest gelagert, welcher den hohlen Fortsatz 14 des zweiten Steuerkolbens 5 umgibt, der über Dichtungen 28 und 29 an dem Einsatz 27 dichtend geführt ist. Der Einsatz selbst ist gehäuseseitig über zwei weitere Dichtungen abgedichtet gelagert und von einem Sicherungsring 30 gehalten. Der hohle Fortsatz 14 bildet mit seiner Dichtung 29 eine an die Bremskammer 35 anschließende Wiegefläche 31, die somit immer vom Druck in der Bremskammer 25 beaufschlagt ist. Unterhalb des zweiten Steuerkolbens 5, begrenzt vom Gehäuse 1, dem Einsatz 27 und der Dichtung 28 des Fortsatzes 14 ist eine Wiegekammer 32 gebildet, über die eine zweite Wiegefläche 33 am Steuerkolben 5 beaufschlagbar ist. Die Bremskammer 25 ist mit der Wiegekammer 32 über eine axiale Bohrung 34 im Einsatz 27 verbunden. Es ist hier kein Voreilventil dargestellt, obwohl es sich versteht, daß dieses Relaisventil üblicherweise mit Voreilung ausgebildet wird. Dies kann dadurch erreicht werden, daß in der axialen Bohrung 34 ein Voreilventil angeordnet wird. Es ist natürlich auch möglich, diese axiale Bohrung 34 wegzulassen und im Bereich des Gehäuses 1 eine Verbindungsleitung zwischen Bremsleitung 25 und Wiegekammer 32 zu schaffen, in die dann ein von außen einstellbares Voreilventil eingeschaltet ist, wie dies beispielsweise die DE-PS 23 23 753 zeigt.

Der Trennkolben 4 ist mit einem hohlen Fortsatz 35 ausgestattet, der in den hohlen Fortsatz 14 des zweiten Steuerkolbens 5 hineinreicht und in diesem mit Hilfe einer Dichtung 36 dichtend geführt ist. Der Fortsatz 35 weist einen Kanal 37 auf, über den und eine Ausnehmung 38 im hohlen Fortsatz 14 der Raum 13 dauernd durch den hohlen Doppelventilkörper 16 hindurch und eine Bohrung 39 im Bremskolben 17 letztlich an die Atmosphäre angeschlossen ist. Die Bremskammer 25 wird bei geöffnetem Auslaßventil 15, 16 ebenso über diesen Weg entlüftet, so daß das Relaisventil nur eine einzige gemeinsame Entlüftungsöffnung 40 aufweist.

Der hohle Fortssazt 14 des zweiten Steuerkolbens 5 besitzt eine radiale Durchbrechung 41, die zwischen den Dichtungen 28 und 29 angeordnet ist. Der Einsatz 27 weist einen Kanal 42. auf, so daß auf diesem Wege der Anschluß 12 bzw. die Steuerleitung des zweiten Kreises über den Kanal 42 und die radiale Durchbrechung 41 an die zweite Steuerkammer 11 angeschlossen ist. Wird die Dichtung 6 auf dem ersten Steuerkolben 3 undicht, so strömt bei Betätigung Steuerluft des ersten Kreises I aus der Steuerkammer 9 in dem Raum 13 über, der an die Atmosphäre angeschlossen ist, so daß ein Teil der Steuerluft entweichen kann. Durch das dabei auftretende Geräusch und den Druckabfall sind zwei Möglichkeiten gegeben, diesen Defekt zu bemerken. Da die Dichtung 7 jedoch dicht bleibt, ist der zweite Steuerkreis II voll funktionsfähig und die Aussteuerung von Bremsdruck sichergestellt. Wird dagegen die Dichtung 7 auf dem Trennkolben 4 undicht, so strömt wiederum Steuerluft, diesmal jedoch aus dem Steuerkreis II, in die Atmosphäre über, während der Steuerkreis I seine volle Funktionsfähigkeit behält. In all diesen Fällen wird eine Vermischung von Steuerluft beider Steuerkreise I und II verhindert.

Wie aus der Zeichnung besonders gut ersichtlich ist, können die beiden Steuerkolben 3 und 5 sowie der dazwischen befindliche Trennkolben 4 hutartig ausgebildet und über Noppen, Rippen o. dgl. 43, 44 aneinander abgestützt sein. Zusätzlich können noch Zentrierflächen 45 entweder an dem Steuerkolben 3 oder an dem Trennkolben 4 vorgesehen sein. Solche Zentrierflächen zwischen dem Trennkolben 4 und dem zweiten Steuerkolben 5 sind nicht erforderlich, da diese beiden Kolben über die Fortsätze 14 und 35 zusätzlich aneinander geführt und damit zentriert sind. Die Steuerkolben 3 und 5 können vorteilhaft, wie dargestellt, aus Kunststoff bestehen, so daß eine einfache Herstellung gewährleistet ist. Gleiches kann auch für den Trennkolben 4 vorgesehen sein.

### Bezugszeichenliste :

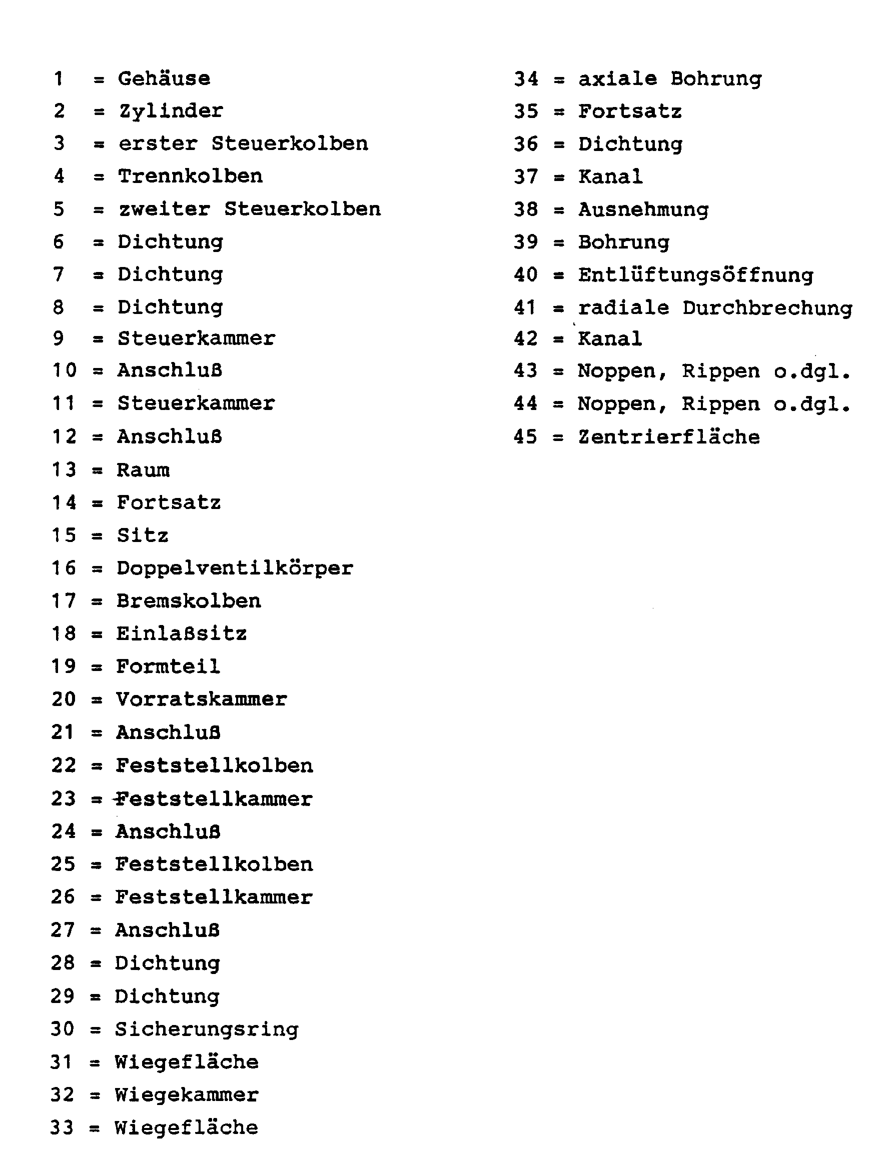

## Patentansprüche

1. Über zwei Kreise ansteuerbares Relaisventil, insbesondere Anhängersteuer- oder Anhängerbremsventil, für Druckluftbremsanlagen an Kraftfahrzeugen, mit zwei je an einen Kreis (I, II) anschließbaren, benachbart angeordneten und gleichsinnig in einem Gehäuse (1) bewegbaren, mit Dichtungen versehenen Steuerkolben (3, 5), wobei der erste Steuerkolben (3) mit geschlossenem Kolbenboden ausgestattet ist und der zweite Steuerkolben (5) an einem hohlen Fortsatz (14) einen Sitz (15) trägt, der mit einem Doppelventilkörper (16) ein Auslaßventil (15, 16) bildet, während zwischen dem Doppelventilkörper und einem Einlaßsitz (18) ein Einlaßventil (16, 18) gebildet wird, wobei zwischen den beiden Steuerkolben (3, 5) ein Trennkolben (4) mit Dichtung (7) vorgesehen ist, der mit dem ersten Steuerkolben (3) einen an die Atmosphäre angeschlossenen Raum (13) einschließt und mit einem hohlen Fortsatz (35) in dem zweiten Steuerkolben (5) dichtend geführt ist, dadurch gekennzeichnet, daß der Trennkolben (4) freifliegend und in einem gemeinsamen Zylinder (2) mit den beiden Steuerkolben (3,5) angeordnet ist, daß der Raum (13) zwischen dem ersten Steuerkolben (3) und dem Trennkolben (4) mittels des hohlen Fortsatzes (35) durch den zweiten Steuerkolben (5) hindurch an die Atmosphäre angeschlossen ist, daß der hohle, den Sitz (15) des Auslaßventils tragende Fortsatz (14) des zweiten Steuerkolbens (5) innen auf dem hohlen Fortsatz (35) des Trennkolbens (4) dichtend geführt ist und außen in einem ortsfest im Gehäuse (1) angeordneten Einsatz (27) dichtend geführt ist, und daß die Steuerkammer (11) des zweiten Steuerkolbens (5) über die durch den Einsatz (27) geführte Steuerleitung be- und entlüftbar ist.

2. Relaisventil nach Anspruch 1, dadurch gekennzeichnet, daß entweder an dem ersten Steuerkolben (3) oder an dem Trennkolben (4), dem entlüfteten Raum (13) zugekehrt, Noppen, Rippen o. dgl. (43) vorgesehen sind.

3. Relaisventil nach Anspruch 2, dadurch gekennzeichnet, daß die Noppen, Rippen o. dgl. (43) mit Zentrierflächen (45) ausgestattet sind.

4. Relaisventil nach Anspruch 1, dadurch gekennzeichnet, daß der hohle Fortsatz (14) des zweiten Steuerkolbens (5) in dem Einsatz (27) mit zwei Dichtungen (28, 29) geführt ist, zwischen denen eine radiale Durchbrechung (41) angeordnet ist, die einen Teil der Steuerleitung bildet.

5. Relaisventil nach Anspruch 1, dadurch gekennzeichnet, daß der Einsatz (27) und der zweite Steuerkolben (5) zur Variation der Wiegefläche (31) austauschbar sind.

6. Relaisventil nach Anspruch 1, dadurch gekennzeichnet, daß der Einsatz (27) eine radiale Bohrung (42), die einen Teil der Steuerleitung für den zweiten Steuerkolben (5) bildet, und eine axiale Bohrung (34), die die Bremskammer (25) mit der Wiegekammer (32) unter dem zweiten Steuerkolben (5) verbindet, aufweist.

## Claims

1. Relay valve, in particular a control or brake valve for a trailer, which can be triggered via two circuits for compressed air braking installations in motor vehicles, having two piston valves (3, 5) provided with seals, each connected to one circuit (I, II), arranged adjacent each other and able to be moved in the same direction within a housing (1), whereby the first piston valve (3) is fitted with an enclosed piston head and the second piston valve (5) supports a seating (15) on a hollow extension piece (14) and said seating forms an outlet valve (15, 16) with a bell-shaped valve gate (16), while an inlet valve (16, 18) is formed between the bell-shaped valve gate and an inlet seating (18), whereby a piston separator (4) with seal (7) is provided between the two piston valves (3, 5) and said piston separator, together with the first piston valve (3), encloses a space (13) connected to the atmosphere and is guided in a sealed way in the second piston valve (5) by means of a hollow extension piece (35), **characterized in that** the piston separator (4) is arranged overhanging and in a common cylinder (2) with the two piston valves (3, 5), that the space (13) between the first piston valve (3) and the piston separator (4) is connected to the atmosphere by means of the hollow extension piece (35) passing right through the second piston vale (5), that the hollow extension piece (14) of the second piston valve (5) which supports the seating (15) for the outlet valve is guided in a sealed way on the inside of the hollow extension piece (35) of the piston separator (4) and on the outside guided in a sealed way in an insert (27) arranged stationary on the housing (1), and that the piston chamber (11) of the second piston valve (5) can be aerated and deaerated via the control line passing through the insert (27).

2. Relay valve according to claim 1, **characterized in that** nipples, ribs or similar (43), facing the deaerated space (13), are provided either on the first piston valve (3) or on the piston separator (4).

3. Relay valve according to claim 2, **characterized in that** the nipples, ribs or similar (43) are fitted with centering areas (45).

4. Relay valve according to claim 1, **characterized in that** the hollow extension piece (14) of the second piston valve (5) is guided by means of two seals (28, 29) in the insert (27) and a radial opening (41), forming a part of the control line, is located between the two said seals.

5. Relay valve according to claim 1, **characterized in that** the insert (27) and the second piston valve (5) can be exchanged in order to vary the balance area (31).

6. Relay valve according to claim 1, **characterized in that** the insert (27) has a radial opening (42) which forms a part of the control line for the second piston valve (5) and an axial opening (34) which links the braking chamber (25) with the balance chamber (32) beneath the second piston valve (5).

## Revendications

1. Valve relais commandée par deux circuits, en particulier valve de commande d'une remorque ou des freins d'une remorque, pour des installations de freins à air comprimé sur des véhicules à moteur, avec deux pistons de commande (3, 5) se raccordant chacun à un circuit (I, II), disposés au voisinage l'un de l'autre et mobiles dans le même sens dans un boîtier (1) et munis de joints, le premier piston de commande (3) ayant un fond de piston fermé et le deuxième piston de commande (5) portant un siège (15) sur un appendice creux (14), ce siège constituant avec un clapet double (16) une soupape d'échappement (15, 16), tandis qu' une soupape d'admission (16, 18) est formée entre le clapet double et un siège d'admission (18), un piston séparateur (4) avec un joint (7) étant prévu entre les deux pistons de commande (3, 5), en renfermant, avec le premier piston de commande (3) un espace (13) relié à l'atmosphère, et étant guidé de manière étanche dans le deuxième piston de commande (5) au moyen d'un appendice creux (35),
**caracterisée** en ce que le piston séparateur (4) flotte librement et est disposé dans un cylindre commun (2) avec les deux pistons de commande (3, 5), en ce que l'espace (13) entre le premier piston de commande (3) et le piston séparateur (4) est relié à l'atmosphère au moyen de l'appendice creux (35) à travers le deuxième piston de commande (5), en ce que l'appendice creux (14) du deuxième piston de commande (5) portant le siège (15) de la soupape d'échappement est guidé intérieurement de manière étanche sur le prolongement creux (35) du piston séparateur et est guidé extérieurement de manière étanche dans une pièce insérée (27) disposée à poste fixe dans le boîtier (1), et en ce que la chambre de commande (11) du deuxième piston de commande (5) est alimentée en air et purgée par l'intermédiaire de la conduite de commande traversant la pièce insérée (27).

2. Valve relais selon la revendication 1, caractérisée en ce que des nopes, des nervures ou autres (43) sont prévues, soit sur le premier piston de commande (3) ou sur le piston séparateur (4) en étant tournées vers l'espace (13) communiquant avec l'atmosphère.

3. Valve relais selon la revendication 2, caractérisée en ce que les nopes, les nervures ou autres (43) sont munies de surfaces de centrage (45).

4. Valve relais selon la revendication 1, caractérisée en ce que l'appendice creux (14) du deuxième piston de commande (5) est guidé dans la pièce insérée (27) au moyen de deux joints (28, 29) entre lesquels est disposé un orifice radial (41) qui constitue une partie de la conduite de commande.

5. Valve relais selon la revendication 1, caractérisée en ce que la pièce insérée (27) et le deuxième piston de commande (5) sont échangeables pour faire varier la surface d'équilibrage (31).

6. Valve relais selon la revendication 1, caractérisée en ce que la pièce insérée (27) présente une forure radiale (42) qui constitue une partie de la conduite de commande pour le deuxième piston de commande (5) et une forure axiale (34) reliant la chambre de frein (25) à la chambre d'équilibrage (32) sous le deuxième piston de commande (5).
